# EUROPEAN PATENT APPLICATION

(11) **EP 1 870 564 A2**
(43) Date of publication of application: **26.12.2007**
(21) Application number: 07110470.7
(22) Date of filing: 18.06.2007
(51) Int. Cl.: F01D 11/14, F01D 11/20, F02C 9/28, F02C 9/24

(54) **Pressurized gas supply and control system for actuation of active seals in turbomachinery**

(30) Priority: 21.06.2006 US 471609
(71) Applicant: General Electric Company A Corporation of the State of New York, Schenectady, NY 12345 (US)
(72) Inventor: Awtar, Shorya, Clifton Park, NY 12065 (US); Bielawa, David Stephen, Clifton Park, NY 12065 (US); Burnett, Mark E., Barton, NY 13734 (US); Baily, Frederick G., Ballston Spa, NY 12020 (US); Turnquist, Norman Arnold, Sloansville, NY 12160 (US); Varanasi, Kirpa Kiran, Clifton Park, NY 12065 (US)
(74) Representative: Illingworth-Law, William Illingworth

(57) **Abstract**

A gas supply and pressure control system delivers controlled pressurized gas according to an electrical command. The system includes a gas supply sub-system outputting a continuous high-pressure gas supply. A pressure control sub-system is provided in fluid communication with the gas supply sub-system and receives the continuous high-pressure gas supply. The pressure control sub-system provides a modulated pressure to a downstream volume, such as actuators for active seals in a turbomachinery environment, based on the electrical command.

## Description

### BACKGROUND OF THE INVENTION

The present invention relates generally to rotary machines and, more particularly, to a pressurized gas supply and control system for actuation of active seals in turbomachinery.

Rotary machines include, without limitation, steam turbines, gas turbines, and compressors. A steam turbine has a steam path that typically includes, in serial-flow relationship, a steam inlet, a turbine, and a steam outlet. A gas turbine has a gas path that typically includes, in serial-flow relationship, a gas intake (or inlet), a compressor, a combustor, a turbine, and a gas outlet (or exhaust nozzle). Gas or steam leakage, either out of the gas or steam path or into the gas or steam path, from an area of higher pressure to an area of lower pressure, is generally undesirable. For example, a gas path leakage in the turbine or compressor area of a gas turbine, between the rotor of the turbine or compressor and the circumferentially surrounding turbine or compressor casing, will lower the efficiency of the gas turbine leading to increased fuel costs. Also, steam-path leakage in the turbine area of a steam turbine, between the rotor of the turbine and the circumferentially surrounding casing, will lower the efficiency of the steam turbine leading to increased fuel costs.

It is known in the art of steam turbines to position, singly or in combination, labyrinth-seal segments with or without brush seals, in a circumferential array between the rotor of the turbine and the circumferentially surrounding casing to minimize steam-path leakage. Springs hold the segments radially inward against surfaces on the casing that establish radial clearance between seal and rotor but allow segments to move radially outward in the event of rotor contact. While labyrinth seals, alone or in combination with brush seals, have proved to be quite reliable, labyrinth-seal performance degrades over time as a result of transient events in which the stationary and rotating components interfere, rubbing the labyrinth teeth into a "mushroom" profile and opening the seal clearance. One means of reducing the degradation due to rubbing has been to employ "positive-pressure" variable-clearance labyrinth packings, in which springs are used to hold the packing-ring segments open under no- or low-flow conditions during which such rubbing is most likely to occur. Internal steam forces overcome the springs at higher load acting to close the rings to a close running position. However, an 'actively controlled' variable-clearance arrangement is desirable, in which the packing-ring segments are held open against springs and steam force by internal actuators, during the conditions under which rubbing is most likely to occur. At the operating conditions under which rubbing is unlikely, actuator force is reduced, permitting the springs and steam forces to move the segments to their close running position. Such an 'actively controlled' variable-clearance arrangement is also referred to as the active seals.

In one application, active seals in turbomachinery, however, require high-pressure fluid medium, such as gas or liquid, for actuation. This actuation fluid has to meet several requirements. In particular, the actuation fluid pressure needs to be adjustable so that the differential pressure across the actuators can be set to a minimum level that is necessary to open, close, or maintain the seals at a desired position. Over-pressurization and under-pressurization of the actuators are both detrimental to the life of the actuators. Therefore, a fluid supply and control system is necessary that is capable of providing an actuation pressure variable in real-time depending on the operating condition of the machine.

Additionally, the system has to be capable of providing a sufficient actuation fluid flow rate so that the pressure in the actuators can be modulated rapidly. A low flow rate results in a poor response time of the active seals, which can be undesirable.

Moreover, in case a gas is used as the actuation fluid, it is necessary that the pressurized gas provided is devoid of condensed moisture at system temperatures. Moisture can lead to an undesirably high pressure within the actuator during the seal operation, which can damage the pneumatic actuators or other components in the system.

Finally, it is necessary that the pressurized fluid provided is clean. The fluid has to flow through several valves and orifices, which can get blocked if the fluid is not clean. Blockage in the gas flow path can lead to over-pressurization or under-pressurization of the actuator.

### BRIEF DESCRIPTION OF THE INVENTION

In an exemplary embodiment of the invention, a gas supply and pressure control system delivers controlled pressurized gas according to an electrical command. The system includes a gas supply sub-system outputting a continuous high-pressure (clean and dry) gas supply, and a pressure control sub-system in fluid communication with the gas supply sub-system and receiving the continuous high-pressure gas supply. The pressure control sub-system provides a modulated pressure to a downstream volume based on the electrical command.

In another exemplary embodiment of the invention, a method of delivering controlled pressurized gas according to an electrical command includes the steps of outputting a continuous high-pressure gas supply, and receiving the continuous high-pressure gas supply with a pressure control sub-system and providing a modulated pressure to a downstream volume based on the electrical command.

In yet another exemplary embodiment of the invention, the system includes the gas supply sub-system and the pressure control sub-system as well as redundancy measures that eliminate a possibility of system failure in the event of any single point or single component failures, where the redundancy measures include structure that enables individual components to be serviced without interrupting the controlled pressurized gas delivery.

### BRIEF DESCRIPTION OF THE DRAWINGS

Embodiments of the present invention will now be described, by way of example only, with reference to the accompanying drawings, in which:
FIGURE 1 is a schematic illustration of one system and hardware for gas supply and pressure control; and
FIGURE 2 is a schematic illustration of an alternative embodiment.

### DETAILED DESCRIPTION OF THE INVENTION

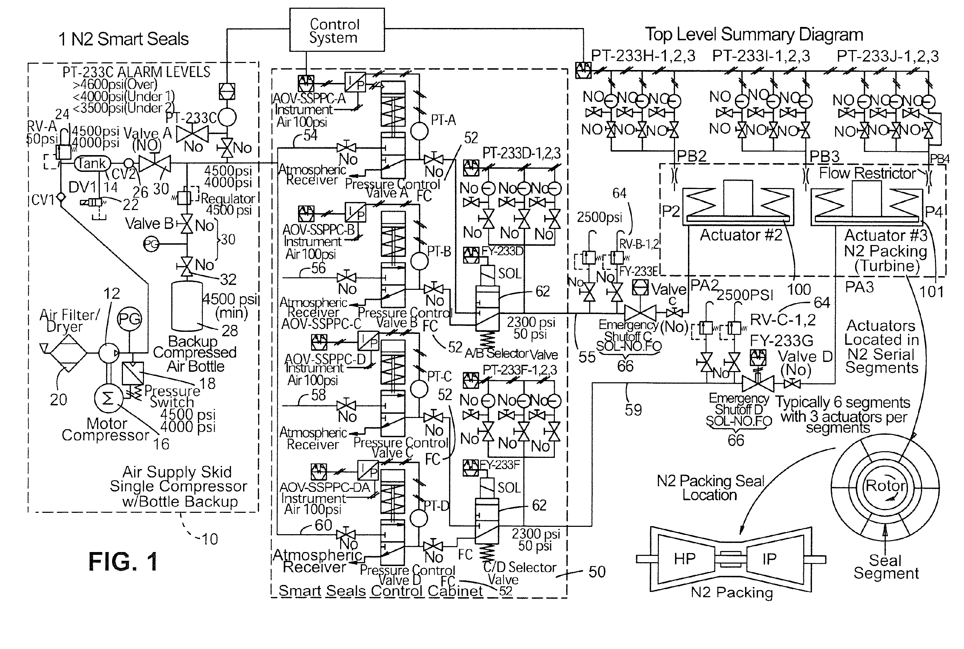

With reference to FIG. 1, the system is generally made up of two basic sub-systems including a gas supply sub-system 10 and a pressure control sub-system 50. The gas supply sub-system 10 serves to provide a continuous high-pressure clean and dry gas supply to the pressure control sub-system 50. The pressure control sub-system 50 provides a modulated pressure to a downstream volume, for example pneumatic actuators 100, 101, per an electrical command.

The gas supply sub-system 10 can be arranged in multiple configurations. In a preferred configuration, a primary source of pressurized gas supply is a compressor 12 that maintains an accumulator tank 14 charged to a predetermined pressure. A motor 16 that drives the compressor 12 communicates with a pressure switch 18 that activates the compressor 12 when the pressure in the accumulator 14 falls below a predetermined level. The pressure switch 18 deactivates the compressor 12 when the pressure in the accumulator 14 reaches a second predetermined level.

The compressor inlet is equipped with air dryer and air filter units 20. Additionally, the accumulator tank 14 is equipped with a manual or automatic drain valve 22 that drains any condensate that collects in the accumulator 14. The accumulator 14 is also equipped with a safety relief valve 24 to protect the gas supply system from over-pressurization. A non-return valve 26 is incorporated to prevent backflow into the compressor 12 when it is not in operation.

In addition to the accumulator 14, which is continuously kept charged by the compressor 12, the gas supply system is equipped with a backup gas bottle or bottles 28. Gas supply to the downstream pressure control sub-system 50 can be switched between the accumulator 14 and the backup gas bottle 28 by means of a manual or automatic valve arrangement 30, which can comprise two one-way valves or a single three-way valve.

This arrangement provides a reliable source of actuation gas in the event of a compressor or system failure. A "system failure" is an event when the pressurized gas supply and control system become incapable of providing pressurized gas, modulated as per the electrical command, to the actuators 100, 101. In this situation, first the accumulator 14 provides the necessary pressurized gas, and after it gets depleted, the backup gas bottle 28 is utilized. The backup gas bottle 28 is provided with an automated or manual shut-off valve 32 and a mutual or independent pressure regulator 34 (in case of multiple bottles).

With continued reference to FIG. 1, the pressure control sub-system 50 receives the high-pressure gas supplied by the gas supply sub-system 10 and modulates it to a commanded level for the actuation of the downstream volume, e.g., actuators in active seals. Real-time pressure regulation/modulation is achieved by means of a pressure control valve assembly 52. Input to the pressure control valve assembly 52 is the high-pressure gas from the gas supply sub-system 10 and an electrical command, and the output is a gas at a desired pressure corresponding to the electrical command.

In an exemplary application with reference to the active seals discussed above, a computer controller can determine a current operating state of the turbomachinery and the desired configuration of the seals (e.g., maintain open, open, maintain closed, close), and based on this information, the controller generates the electrical command that represents the desirable or target actuation pressure. The same controller or a second controller (indicated by the I/P block in FIG. 1) then compares the target pressure with a measurement of the actual modulated pressure, and the pressure control valve assembly 52 works to bring the actual value to the target value by means of feedback control.

The pressure control sub-system 50 preferably utilizes at least two independent lines for each downstream volume as required by the number of actuators and/or seal segments that have to be actuated independently (in the exemplary application). As shown in FIG. 1, lines (1) and (2) 54, 56 are selectively coupled with a first actuator 100 via line 55, and lines (3) and (4) 58, 60 are selectively coupled with a second actuator 101 via line 59. Each line 55, 59 may incorporate singular or multiple redundant pressure control assemblies to make the system insensitive to individual component failures.

The possibly multiple redundant pressure control valve assemblies 52 are connected to the downstream actuator 100, 101 via a selector switch 62. Only one pressure control assembly is operational per line at any given time if redundant lines are employed. If the controller detects that one pressure control valve assembly has failed, the controller will automatically switch the selector switch 62 to an alternate pressure control valve assembly.

Further downstream, the system is equipped with singular or multiple relief valves 64. The relief valves 64 provide further protection from over-pressurization in the event of a failure of the pressure control sub-system 50. The pressure relief valves 64 also provide protection to the system from damage in the event of an unexpected pressure spike, for example, resulting from moisture in the gas. The system further incorporates a combination of manual and automatic isolation valves 66 that isolate the entire system from the actuators 100, 101 in the event that the pressure control sub-system 50 or the gas supply sub-system 10 fails such that no repair is possible, and/or a failure of the downstream volume, e.g., the actuators 100, 101.

The system is controlled by a computer/controller that accepts and processes signals, such as pressure measurements, machine operating conditions, etc., from the turbomachinery, generates appropriate commands that are sent to the pressure control valve assembly 52, and handles fault detection and accommodation. The controller continually monitors or estimates the pressure inside the actuators 100, 101 to ensure that the pressure matches the commanded value.

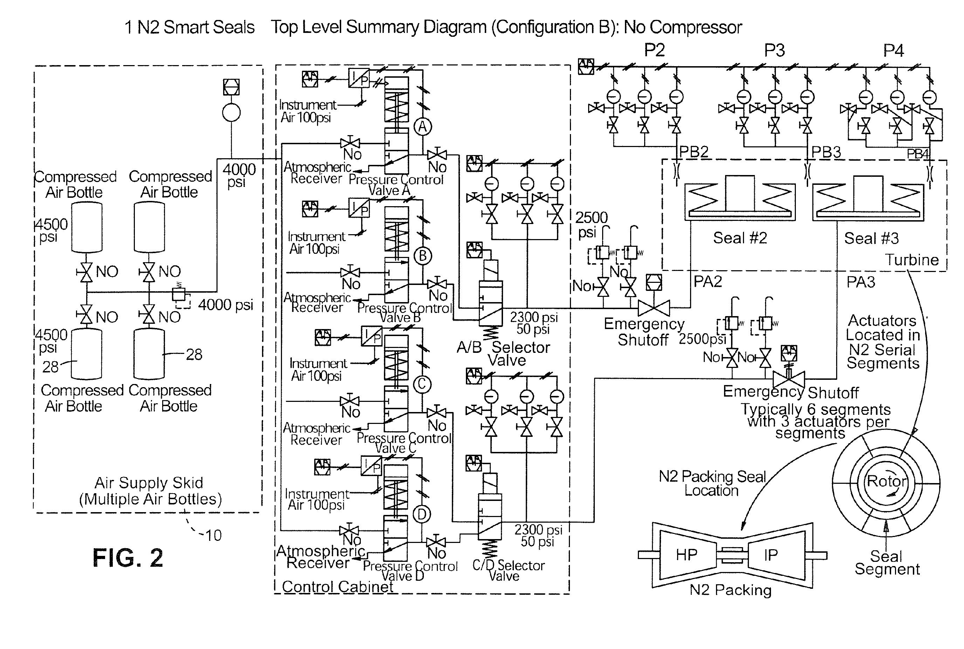

FIG. 2 illustrates an alternative embodiment where the compressor 12 is eliminated, and the gas supply sub-system 10' includes a manifold of gas bottles 28 or a single bottle 28. The manifold is equipped with pressure regulation that ensures that the downstream system is protected from over-pressurization. Air bottles 28 can be individually replaced as required, with the system remaining on-line and operating uninterrupted as required. This configuration requires regular gas-bottle replacement by the user but eliminates the compressor, accumulator, air dryer and filters.

In the exemplary turbomachinery environment, the system provides clean and dry gas at modulated pressures thereby preserving the life of the actuators and reliable active seal operation. Additionally, the system incorporates features that minimize the possibility of dirt and moisture in the system, which can damage the components and actuators, and eventually the seals. The design allows the user to choose between two independent gas supply systems. Additionally, the system provides a high degree of reliability utilizing several levels of redundancy that make it insensitive to single-point failures. In this context, three transducers are preferably used for each pressure measurement for locations within the turbomachinery (e.g., PT233H, PT233I, PT233J) as well as each downstream volume (e.g. PT233D, PT233E). The transducer arrangement effects a triple redundancy. Accurate pressure measurement is important for reliable operation of the system. If, for a given pressure measurement, the controller detects that one transducer is reading something different from the other two, the controller ignores the aberrant one. This redundancy maintains reliability against single point or component failures.

Individual components can be isolated and serviced while the system is on-line without interrupting the pressurized gas supply to the actuators. Still further, the system has been designed with safety features including relief valves and pressure regulators that ensure that the system is never over-pressurized, and isolation valves and non-return valves that ensure that the system can be cut off from the actuators and that there is no undesirable backflow.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A gas supply and pressure control system for delivering controlled pressurized gas according to an electrical command, the system comprising: a gas supply sub-system (10) outputting a continuous high-pressure gas supply; and a pressure control sub-system (50) in fluid communication with the gas supply sub-system and receiving the continuous high-pressure gas supply, the pressure control sub-system providing a modulated pressure to a downstream volume based on the electrical command.

2. A gas supply and pressure control system according to claim 1, wherein the gas supply sub-system comprises:
a compressor (12);
an accumulator tank (14) in fluid communication with the compressor; and a pressure switch (18) coupled between the compressor and the accumulator tank, the pressure switch activating the compressor when the accumulator tank pressure falls below a predetermined minimum pressure and deactivating the compressor when the accumulator tank pressure reaches a predetermined maximum pressure.

3. A gas supply and pressure control system according to claim 2, wherein the compressor (12) comprises an air filter unit and an air dryer unit (20) at an inlet thereof, and wherein the accumulator tank (14) comprises a drain valve (22) that drains condensate from the accumulator tank.

4. A gas supply and pressure control system according to any one of the preceding claims, wherein the gas supply sub-system (10) further comprises at least one backup gas-bottle (28) storing pressurized gas for selectively providing the continuous high-pressure gas supply to the pressure control sub-system (50).

5. A gas supply and pressure control system according to claim 4, wherein the gas supply sub-system (10) comprises a manual or automatic valve (30) for selecting between the compressor (12) and the at least one backup gas-bottle (28) for providing the continuous high-pressure gas supply.

6. A gas supply and pressure control system according to claim 1, wherein the gas supply sub-system (10) comprises at least one gas-bottle (28) storing pressurized gas.

7. A gas supply and pressure control system according to claim 1, wherein the pressure control sub-system (50) comprises a pressure control valve (52) that effects real time pressure modulation based on the electrical command.

8. A gas supply and pressure control system according to claim 1, wherein the gas supply sub-system (50) outputs a continuous high-pressure, clean and dry gas supply.

9. A method of delivering controlled pressurized gas according to an electrical command, the method comprising:
a gas supply sub-system (10) outputting a continuous high-pressure gas supply; and
a pressure control sub-system (50) receiving the continuous high-pressure gas supply and providing a modulated pressure to a downstream volume based on the electrical command.

10. A method according to claim 9, wherein the pressure control sub-system (50) comprises a pressure control valve (52), the method further comprising effecting real time pressure modulation in the downstream volume based on the electrical command.
